# EUROPEAN PATENT APPLICATION

(11) **EP 4 545 823 A2**
(43) Date of publication of application: **30.04.2025**
(21) Application number: 25150601.0
(22) Date of filing: 08.01.2025
(51) Int. Cl.: F16J 15/34

(54) **A SEALING ARRANGEMENT AND A CLIMATE CHAMBER**

(71) Applicant: Volvo Truck Corporation, 405 08 Göteborg (SE)
(72) Inventor: SÖDERSTRÖM, Johan, SE-444 91 STENUGNSUND (SE)
(74) Representative: Kransell & Wennborg KB

(57) **Abstract**

A sealing arrangement (100) for reducing leakage of gas via an opening (10) formed in a chamber wall (2) of a chamber (1) in connection with rotation of a shaft (20) extending through the opening, comprising:
an annular first sealing device (120) configured to be sealingly attached around the shaft,
a second sealing device comprising a base part (102) configured to be sealingly attached to the chamber wall around the opening, and an adjustment part (103) defining an aperture (104) for receiving the shaft, the adjustment part being adjustable relative to the base part to enable adjustment of a position of the first aperture relative to the opening (10) when the base part is attached to the wall, thereby adapting the sealing arrangement to different shaft angles,
wherein the first and second sealing devices are together configured to form an annular seal (150) extending around the aperture.

## Description

### TECHNICAL FIELD

The disclosure relates generally to climate chambers used for testing of vehicle equipment including rotating components, such as transmissions, motors, etc. In particular aspects, the disclosure relates to a sealing arrangement and a climate chamber. The disclosure can be applied in the testing of equipment for heavy-duty vehicles, such as trucks, buses, and construction equipment, among other vehicle types.

### BACKGROUND

In testing of vehicle equipment comprising rotating components, such as transmissions, it is common to use a climate chamber in which the temperature can be varied and in which the vehicle equipment to be tested is placed. Usually, a motor or engine driving the vehicle equipment via a rotating shaft is positioned outside of the chamber. This requires that the climate chamber has an opening through which the rotating shaft may extend. A temperature difference between the climate chamber and a room in which it is located may be large, since it is desirable that the temperature within the climate chamber can be set to temperatures corresponding to extreme weather conditions. Leakage of air via the opening may therefore lead to substantial energy losses as well as difficulties to control the temperature within the climate chamber.

### SUMMARY

According to a first aspect of the disclosure, a sealing arrangement for reducing leakage of gas via an opening formed in a chamber wall of a chamber in connection with rotation of a shaft extending through the opening, the sealing arrangement comprising:
an annular first sealing device configured to be sealingly attached to the shaft around a perimeter of the shaft,
a second sealing device comprising a base part configured to be sealingly attached to the chamber wall around the opening, and an adjustment part defining a first aperture for receiving the shaft, the adjustment part being adjustable relative to the base part to enable adjustment of a position of the first aperture relative to the opening in the chamber wall when the base part is attached to the chamber wall,
wherein the first sealing device and the second sealing device are together configured to form an annular seal extending around the first aperture.

The first aspect of the disclosure may seek to provide an in at least some aspect improved sealing arrangement for a climate chamber. A technical benefit may include the possibility to accommodate the rotating shaft at different shaft angles, thanks to the possibility to adjust the position of the first aperture relative to the opening. A reduced leakage of gas, and thereby temperature, via the opening may thereby be achieved.

Optionally in some examples, including in at least one preferred example, the shaft is configured to extend through the opening at a shaft angle defined relative to a normal direction of the chamber wall, and the adjustment part is configured to enable adjustment of the position of the first aperture relative to the opening to receive the shaft extending through the opening and the first aperture at any shaft angle within a predefined non-zero range of shaft angles. A technical benefit may include accommodating varying shaft angles, which improves adaptability and reduces leakage of gas via the sealing arrangement.

Optionally in some examples, including in at least one preferred example, the predefined non-zero range of shaft angles includes at least shaft angles having a magnitude of up to 5°, preferably shaft angles having a magnitude of up to 10°, more preferably shaft angles having a magnitude of up to 15°. In at least one preferred example, the predefined non-zero range of shaft angles includes shaft angles having a magnitude of up to 7°. A technical benefit may include a sufficient versatility of the sealing arrangement for different operational configurations.

Optionally in some examples, including in at least one preferred example, the annular seal is formed by a first sealing surface of the first sealing device and a second sealing surface of the adjustment part. A technical benefit may include improved sealing efficiency by ensuring close contact between the sealing surfaces when the position of the first aperture is altered.

Optionally in some examples, including in at least one preferred example, the adjustment part is configured to be tiltable relative to the base part about at least a first axis, the first axis being parallel to the chamber wall. A technical benefit may include the ability to accommodate various shaft angles.

Optionally in some examples, including in at least one preferred example, the first sealing device and the second sealing device are configured to be mounted to the shaft and the chamber wall, respectively, when the shaft extends through the opening. A technical benefit may include simplified assembly and maintenance processes.

Optionally in some examples, including in at least one preferred example, the first sealing device comprises at least two releasably joinable first parts configured to be disposed on opposing portions of the perimeter of the shaft. A technical benefit may include easier installation and removal of the sealing device without disassembling the shaft.

Optionally in some examples, including in at least one preferred example, the at least two releasably joinable first parts together form an inner ring, wherein the first sealing device further comprises at least two releasably joinable second parts together forming an outer ring, and a sealing flange clamped between the inner ring and the outer ring. A technical benefit may include enhanced sealing performance by securely retaining the sealing flange.

Optionally in some examples, including in at least one preferred example, the sealing flange is made of a pliable material. A technical benefit may include improved conformity to irregular surfaces, enhancing sealing efficiency.

Optionally in some examples, including in at least one preferred example, the base part comprises at least two releasably joinable parts configured to be disposed on mutually opposite sides of the shaft extending through the opening, and the adjustment part comprises at least two releasably joinable parts configured to be disposed on mutually opposite sides of the shaft extending through the opening. A technical benefit may include easier installation and removal of the sealing device without disassembling the shaft.

Optionally in some examples, including in at least one preferred example, the base part comprises a proximal wall configured to abut the chamber wall, and a distal wall formed at a distance from the proximal wall as measured in a direction normal to the proximal wall, a second aperture configured to overlap with the opening of the chamber wall being formed in the proximal wall and a third aperture configured to overlap with the opening of the chamber wall being formed in the distal wall, wherein the distal wall comprises an annular pocket extending around an edge of the third aperture, the pocket being configured to slidingly receive the adjustment part. The position of the first aperture may thereby be varied by sliding the adjustment member to a desired position within the annular pocket. A technical benefit may include enhanced adjustability and sealing integrity.

Optionally in some examples, including in at least one preferred example, the distal wall and the adjustment part together form a dome shape with a convexly rounded distal side facing away from the proximal wall. A technical benefit may include enhanced adjustability.

Optionally in some examples, including in at least one preferred example, the first sealing device comprises a sealing surface configured to face a surface portion of the convexly rounded distal side provided on the adjustment part. A technical benefit may include facilitated adjustment of the seal between the first and second sealing devices by adjusting a position of the first sealing device.

Optionally in some examples, including in at least one preferred example, the base part comprises at least one proximal part comprising the proximal wall, and at least one removable distal part, the annular pocket being formed between the proximal and distal parts. A technical benefit may include modular construction, facilitating replacement and customization.

Optionally in some examples, including in at least one preferred example, the adjustment part comprises a sheet formed as a portion of a spherical shell. A technical benefit may include improved adjustability for various shaft angles.

Optionally in some examples, including in at least one preferred example, the adjustment part is configured to be attached to the base part by fasteners, wherein at least some of the fasteners are configured to enable adjustment of a distance between the base part and the adjustment part. A technical benefit may include that a tilting of the adjustment part relative to the base part may be achieved, such that a position of the first aperture relative to the opening in the chamber wall may be varied.

Optionally in some examples, including in at least one preferred example, a column configured to be filled with an insulating material is formed between the base part and the adjustment part. A technical benefit may include enhanced thermal insulation, reducing heat transfer between the chamber interior and exterior.

Optionally in some examples, including in at least one preferred example, the first sealing device is configured to be disposed between the base part and the adjustment part, and the annular seal is configured to be formed between a proximal surface of the adjustment part and a distal surface of the first sealing device. A technical benefit may include efficient sealing.

Optionally in some examples, including in at least one preferred example, the base part is configured to be attached to the chamber wall by fastening devices configured to enable adjustment of the base part relative to the chamber wall along at least one direction parallel with the chamber wall. A technical benefit may include enhanced adjustability of the position of the first aperture relative to the opening.

According to a second aspect of the disclosure, a climate chamber for testing of vehicle components, comprising the sealing arrangement of the first aspect is provided. The second aspect of the disclosure may seek to provide an in at least some aspect improved climate chamber. A technical benefit may include a climate chamber which is able to accommodate rotating shafts at various shaft angles, with relatively small leakage of gas via the opening. Thanks to the possibility to vary the shaft angle, a more compact arrangement may be provided, suitable for testing of equipment for heavy-duty vehicles.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary climate chamber according to an example.
**FIG. 2** is a sectional view of an exemplary sealing arrangement according to a first example.
**FIG. 3** is a front end view of parts of the sealing arrangement according to the first example.
**FIG. 4** is a side view of parts of the sealing arrangement according to the first example.
**FIG. 5** is a perspective view of parts of the sealing arrangement according to the first example.
**FIG. 6** is a front end view of an exemplary sealing arrangement according to a second example.
**FIG. 7** is a sectional view of the sealing arrangement according to the second example along the line A-A in FIG. 6.

The drawings are schematic and are not necessarily drawn to scale. Like reference numbers refer to like elements, unless expressed otherwise.

### DETAILED DESCRIPTION

The detailed description set forth below provides information and examples of the disclosed technology with sufficient detail to enable those skilled in the art to practice the disclosure.

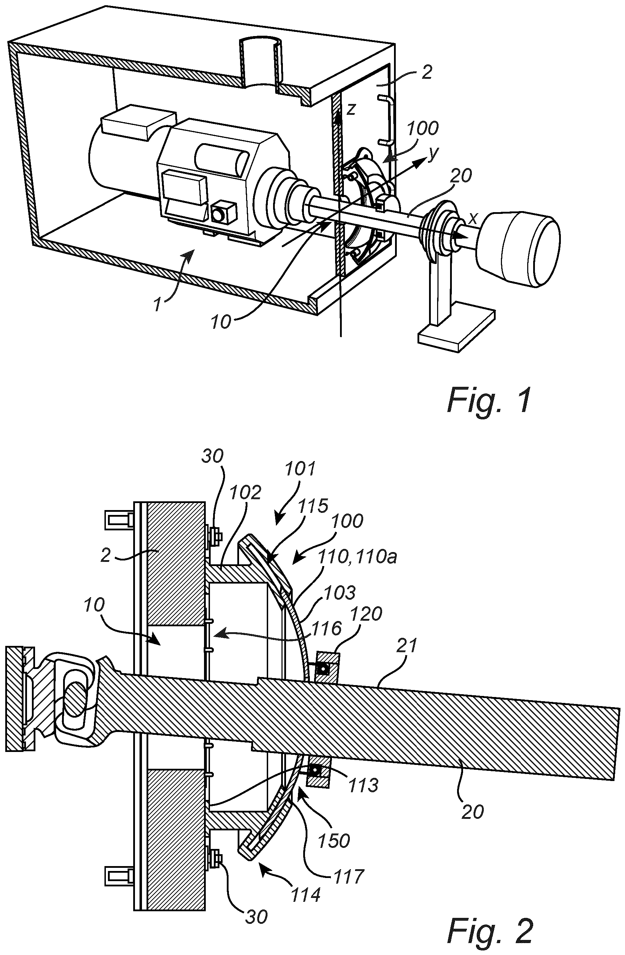

**FIG. 1** is an exemplary climate chamber 1 for testing of vehicle components according to an example. The vehicle components to be tested may be any type of components whose behavior in different temperatures needs to be tested, such as components of a powertrain, e.g., a transmission, a differential, a motor, an engine, etc. In particular, the climate chamber 1 is suitable for the testing of rotating components driven by an engine or electric motor positioned outside of the climate chamber 1 via a shaft 20 extending through an opening 10 provided in a chamber wall 2. A temperature difference between the climate chamber 1 and a room in which it is located may be large, since it is desirable that the temperature within the climate chamber 1 can be set to temperatures corresponding to extreme weather conditions. Leakage of air via the opening 10 may therefore lead to substantial energy losses as well as difficulties to control the temperature within the climate chamber 1.

A sealing arrangement 100 is arranged to provide a seal between the shaft 20 and the chamber wall 2 and thereby reduce the leakage of gas, such as air, via the opening 10. In the illustrated example, the chamber wall 2 extends in a yz-plane and the shaft 20 extends along an x-axis, normal to the yz-plane. However, it is desirable to be able to change the direction of extension of the shaft 20, such that it can extend at an angle with respect to the x-axis. The shaft 20 may, for example, be a propeller shaft whose angle of extension may be varied to adapt to different powertrain configurations. For this purpose, the proposed sealing arrangement 100 is arranged such that it can be adjusted to accommodate a range of different shaft angles.

**FIG. 2** illustrates the sealing arrangement 100 according to a first example of the disclosure, arranged to form a seal between a propeller shaft 20 and a chamber wall 2, wherein the shaft 20 extends at a non-zero shaft angle through an opening in the chamber wall 2. The sealing arrangement 100 comprises an annular first sealing device 120 configured to be sealingly attached to the shaft 20 around a perimeter 21 of the shaft 20. It further comprises a second sealing device 101, comprising a base part 102 configured to be sealingly attached to the chamber wall 2 around the opening 10. A proximal wall 113 of the base part 102 abuts the chamber wall 2 and extends in parallel with the chamber wall 2. The second sealing device 101 further comprises an adjustment part 103 defining a first aperture for receiving the shaft 20. The adjustment part 103 is adjustable relative to the base part 102 to enable adjustment of a position of the first aperture relative to the opening 10 in the chamber wall 2 when the base part 102 is attached to the chamber wall 2. The first sealing device 120 and the second sealing device 101 are together configured to form an annular seal 150 extending around the first aperture. In the illustrated first example, the first sealing device 120 is in contact with the adjustment part 103, which is in the form of a sheet formed as a portion of a spherical shell. The adjustment part 103 is slidable within an annular pocket 115 formed in a distal wall 114 of the base part 102, the pocket 115 having a shape adapted to receive the adjustment part 103, such that the position of the first aperture through which the shaft 20 extends can be adjusted. The distal wall 114 is formed at a distance from the proximal wall 113, as measured in a direction normal to the proximal wall 113. The sizes of the adjustment part 103 and the pocket 115 are adapted such that an entire peripheral edge of the adjustment part 103 is always contained within the pocket 115. Hence, the adjustment part 103 can in the illustrated first embodiment be moved relative to the base part 102 to accommodate a shaft 20 extending in any direction within a predefined range of shaft angles delimited by the design of the second sealing device 101.

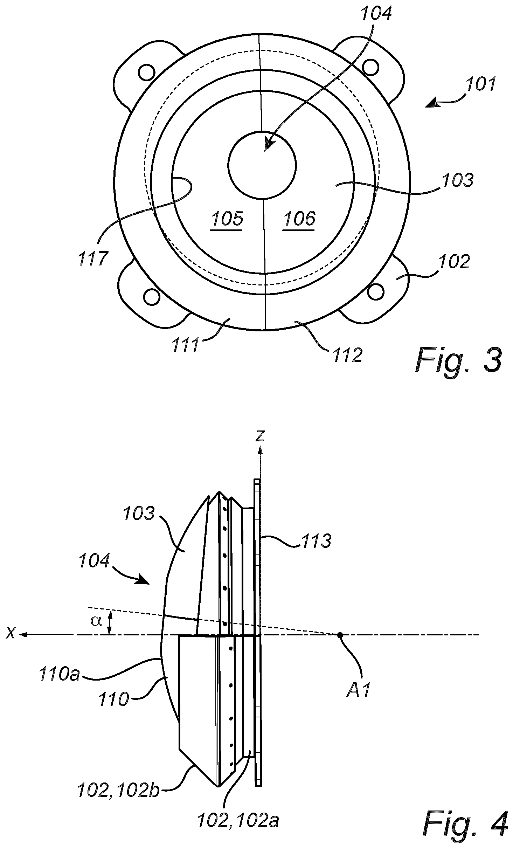

**FIGS. 3-4** illustrate the second sealing device 101 in further detail. The base part 102 may be formed from several parts. As best seen in FIG. 3, the base part 102 may comprise two releasably joinable parts 111, 112 configured to be disposed on mutually opposite sides of the shaft 20 extending through the opening 10 in the chamber wall 2. The two releasably joinable parts 111, 112 may be identical. The adjustment part 103 may also comprise at least two releasably joinable parts 105, 106 configured to be disposed on mutually opposite sides of the shaft 20 extending through the opening 10. In **FIG. 3****,** the dashed line corresponds to the peripheral edge of the adjustment part 103. A circular first aperture 104 for receiving the shaft 20 is formed when the releasably joinable parts 105, 106 are joined together. In this way, the second sealing device 101 may be assembled in connection with mounting on the chamber wall 2, such that it can be mounted to the chamber wall 2 when the shaft 20 already extends through the opening 10.

The base part 102 may comprise more than two separate parts. As illustrated in **FIG. 4****,** the base part 102 may comprise at least one proximal part 102a, comprising the proximal wall 113 configured to abut the chamber wall 2 (see **FIG. 2**), and at least one removable distal part 102b. The annular pocket 115 (see **FIG. 2**) may be formed between the proximal and distal parts 102a, 102b. In this way, the adjustment part 103 may be mounted after the proximal part 102a, whereafter the distal part 102b is attached to the proximal part 102a by fasteners, screw fitting, adhesive, or any other type of attachment means. To enable mounting of the base part 102 around the shaft 20 as described above, two releasable proximal parts 102a and two releasable distal parts 102b may be provided. In **FIG. 4****,** only one of the distal parts 102b is illustrated.

A second aperture 116 is formed in the proximal wall 113 of the base part 102, and a third aperture delimited by an edge 117 is formed in the distal wall 114. Both the second and third apertures are configured to overlap with the opening 10 of the chamber wall 2 such that the shaft 20 may extend through the base part 102.

The distal wall 114 and the adjustment part 103 together form a dome shape with a convexly rounded distal side 110 facing away from the proximal wall 113. The distal side 110 comprises a convexly rounded surface portion 110a provided on the adjustment part 103. The surface portion 110a is configured to form the annular seal 150 together with the first sealing device 120 and constitutes a second sealing surface 110a of the sealing arrangement 100.

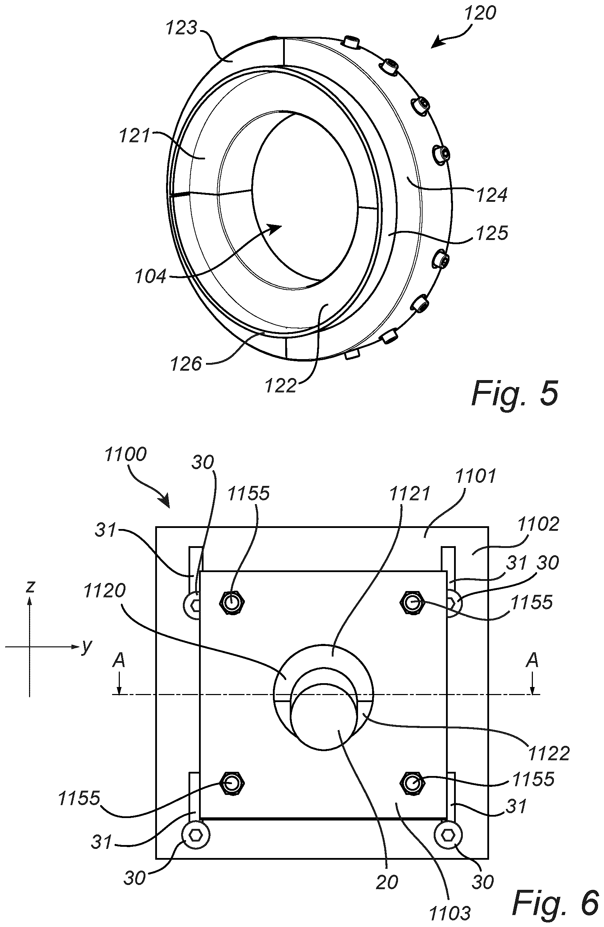

FIG. 5 illustrates the first sealing device 120 used in the sealing arrangement 100 according to the first example in greater detail. The first sealing device 120 comprises a first sealing surface 126 configured to face the convexly rounded surface portion 110a of the adjustment part 103. It is not necessary that the first sealing surface 126 and the second sealing surface 110a (refer to Fig. 4) are in contact during use, although the sealing integrity will be improved if they are. However, since the shaft 20 (as shown in Fig. 2) and thereby also the first sealing device 120 will rotate with respect to the second sealing device 101 (as shown in Fig. 2), friction will be generated when the surfaces are in contact. Hence, an optimal position of the first sealing device 120 relative to the second sealing device 101 may be found by taking friction losses as well as energy losses due to gas leakage via the annular seal 150 into account. Lubrication may be used if the surfaces are in contact.

The first sealing device 120 comprises at least two releasably joinable first parts 121, 122 configured to be disposed on opposing portions of the perimeter 21 of the shaft 20 (as shown in Fig. 2), i.e., on opposite sides of the shaft 20. These first parts 121, 122 together form an inner ring. The first sealing device 120 further comprises at least two releasably joinable second parts 123, 124 together forming an outer ring, and a sealing flange 125 clamped between the inner ring and the outer ring. The sealing flange 125 may preferably be made of a pliable material, such as a soft rubber material or similar. Hence, similar to the second sealing device 101, the first sealing device 120 is made of several parts that can be assembled around the shaft 20 when the shaft 20 already extends through the opening 10.

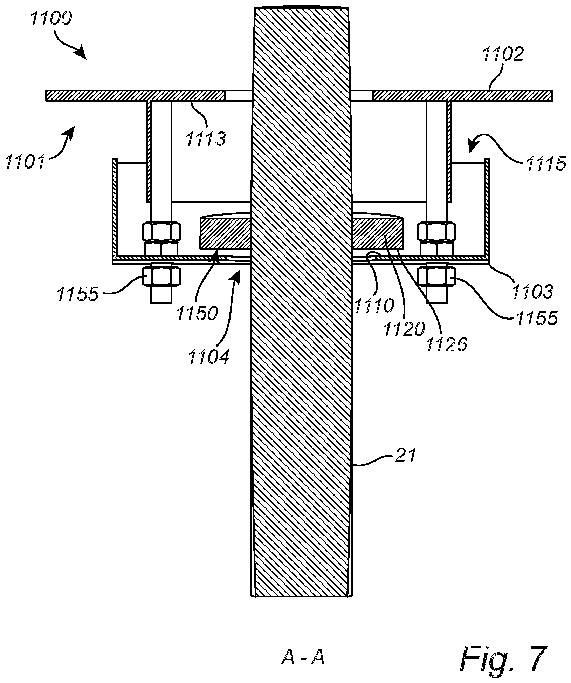

**FIGS. 6-7** illustrate a sealing arrangement 1100 according to a second example of the disclosure. Similar to the first example, the sealing arrangement 1100 comprises an annular first sealing device 1120 configured to be sealingly attached to the shaft 20 around a perimeter 21 of the shaft 20. The sealing arrangement 1100 further comprises a second sealing device 1101, comprising a base part 1102 configured to be sealingly attached to the chamber wall 2 around the opening 10. A proximal wall 1113 of the base part 1102 abuts the chamber wall 2. The second sealing device 1101 further comprises an adjustment part 1103 defining a first aperture 1104 for receiving the shaft 20. The adjustment part 1103 is adjustable relative to the base part 1102 to enable adjustment of a position of the first aperture 1104 relative to the opening 10 in the chamber wall 2 when the base part 1102 is attached to the chamber wall 2. The first sealing device 1120 and the second sealing device 1101 are together configured to form an annular seal 1150 extending around the first aperture 1104. In the illustrated second example, the first sealing device 1120 is configured to be disposed between the base part 1102 and the adjustment part 1103, and the annular seal 1150 is configured to be formed between a proximal surface 1110 of the adjustment part 1103 and a distal surface 1126 of the first sealing device 1120.

The adjustment part 1103 is in the second example configured to be attached to the base part 1102 by fasteners 1155. At least some of the fasteners 1155, such as all fasteners 1155, are configured to enable adjustment of a distance between the proximal wall 1113 of the base part 1102 and the adjustment part 1103. A tilting of the adjustment part 1103 relative to the base part 1102 may thereby be achieved, such that a position of the first aperture 1104 relative to the opening 10 in the chamber wall 2 may be varied. A column 1115 configured to be filled with an insulating material is formed between the base part 1102 and the adjustment part 1103, reducing heat losses.

Similar to the first example, the first sealing device 1120 may be formed from several releasably joinable parts, such as at least two parts 1121, 1122 configured to be located on opposite sides of the shaft 20. The second sealing device 1101 may also be formed from several releasably joinable parts, such as at least two parts located on opposite sides of the shaft 20.

In both illustrated examples, the base part 102, 1102 is configured to be attached to the chamber wall 2 by fastening devices 30, such as screws or bolts. As illustrated in the second example, the fastening devices 30 may be configured to enable adjustment of the base part 1102 relative to the chamber wall 2 along a direction parallel with the chamber wall 2. In the illustrated second example, this is achieved by elongated slots 31 extending along the z-axis, through which the fastening devices 30 extend.

The shaft 20 may in both examples be configured to extend through the opening 10 at a shaft angle α (see **FIG. 4**) defined relative to a normal direction of the chamber wall 2, corresponding to the x-axis. The adjustment part 103, 1103 is configured to enable adjustment of the position of the first aperture 104, 1104 relative to the opening 10 to receive the shaft 20 extending through the opening 10 and the first aperture 104, 1104 at a shaft angle α within a predefined non-zero range of shaft angles. For this purpose, the adjustment part 103, 1103 is tiltable relative to the base part 102 about at least one axis A1 parallel to the chamber wall 2. In the first example, the configuration of the adjustment part 103 and the pocket 115 enables the range to include all shaft angles α having a magnitude of up to about 7°, since the adjustment part 103 can be moved to any position within the pocket 115 and is not limited to tilting about a specific axis. By adjusting the configuration of the second sealing device 101 such that the adjustment part is only tiltable relative to the base part to accommodate shaft angles lying within the xz-plane, it may be possible to enable tilting to shaft angles having a magnitude of up to 10°, or even up to 15°.

In the second example, the configuration is less flexible and tilting of the adjustment part 1103 may typically be possible about the y-axis and/or about the z-axis by adjusting the length of the fasteners 1155. Shaft angles having a magnitude of up to 5°, or up to 10°, or even up to 15° may be accommodated, provided that the shaft 20 is tilted within the xz-plane.

Although the sealing arrangement 100 is in the illustrated examples mounted to an external side of the chamber wall 2, it may in other examples be mounted to an internal side thereof, i.e., within the chamber 1. However, mounting to the external side may be preferred due to easier assembly and adjustment.

In the following, a list of numbered examples of the disclosure is presented.

Example 1: A sealing arrangement (100, 1100) for reducing leakage of gas via an opening (10) formed in a chamber wall (2) of a chamber (1) in connection with rotation of a shaft (20) extending through the opening (10), the sealing arrangement (100, 1100) comprising:
an annular first sealing device (120, 1120) configured to be sealingly attached to the shaft (20) around a perimeter (21) of the shaft (20),
a second sealing device (101, 1101) comprising a base part (102, 1102) configured to be sealingly attached to the chamber wall (2) around the opening (10), and an adjustment part (103, 1103) defining a first aperture (104, 1104) for receiving the shaft (20), the adjustment part (103, 1103) being adjustable relative to the base part (102, 1102) to enable adjustment of a position of the first aperture (104, 1104) relative to the opening (10) in the chamber wall (2) when the base part (102, 1102) is attached to the chamber wall (2),
wherein the first sealing device (120, 1120) and the second sealing device (101, 1101) are together configured to form an annular seal (150, 1150) extending around the first aperture (104, 1104).

Example 2: The sealing arrangement of example 1, wherein the shaft (20) is configured to extend through the opening (10) at a shaft angle (α) defined relative to a normal direction of the chamber wall (2), and wherein the adjustment part (103, 1103) is configured to enable adjustment of the position of the first aperture (104, 1104) relative to the opening (10) to receive the shaft (20) extending through the opening (10) and the first aperture (104, 1104) at any shaft angle (α) within a predefined non-zero range of shaft angles.

Example 3. The sealing arrangement of example 2, wherein the predefined non-zero range of shaft angles includes at least shaft angles having a magnitude of up to 5°, preferably shaft angles having a magnitude of up to 10°, more preferably shaft angles having a magnitude of up to 15°.

Example 4. The sealing device of any one of the preceding examples, wherein the annular seal (150, 1150) is formed by a first sealing surface (126, 1126) of the first sealing device (120) and a second sealing surface (110a, 1110) of the adjustment part (103, 1103).

Example 5. The sealing arrangement of any one of the preceding examples, wherein the adjustment part (103, 1103) is configured to be tiltable relative to the base part (102, 1102) about at least a first axis (A1), the first axis (A1) being parallel to the chamber wall (2).

Example 6. The sealing arrangement of any one of the preceding examples, wherein the first sealing device (120, 1120) and the second sealing device (101, 1101) are configured to be mounted to the shaft (20) and the chamber wall (2), respectively, when the shaft (20) extends through the opening (10).

Example 7. The sealing arrangement of any one of the preceding examples, wherein the first sealing device (120, 1120) comprises at least two releasably joinable first parts (121, 122; 1121, 1122) configured to be disposed on opposing portions of the perimeter (21) of the shaft.

Example 8. The sealing arrangement of example 7, wherein the at least two releasably joinable first parts (121, 122) together form an inner ring, and wherein the first sealing device (120) further comprises at least two releasably joinable second parts (123, 124) together forming an outer ring, and a sealing flange (125) clamped between the inner ring and the outer ring.

Example 9. The sealing arrangement of example 8, wherein the sealing flange (125) is made of a pliable material.

Example 10. The sealing arrangement of any one of the preceding examples, wherein the base part (102, 1102) comprises at least two releasably joinable parts (111, 112) configured to be disposed on mutually opposite sides of the shaft (20) extending through the opening (10), and wherein the adjustment part (103, 1103) comprises at least two releasably joinable parts (105, 106) configured to be disposed on mutually opposite sides of the shaft (20) extending through the opening (10).

Example 11. The sealing arrangement of any one of the preceding examples, wherein the base part (102) comprises a proximal wall (113) configured to abut the chamber wall (2), and a distal wall (114) formed at a distance from the proximal wall (113) as measured in a direction normal to the proximal wall (113), a second aperture (116) configured to overlap with the opening (10) of the chamber wall (2) being formed in the proximal wall (113) and a third aperture configured to overlap with the opening (10) of the chamber wall (2) being formed in the distal wall (114), and wherein the distal wall (114) comprises an annular pocket (115) extending around an edge (117) of the third aperture, the pocket (115) being configured to slidingly receive the adjustment part (103).

Example 12. The sealing arrangement of example 11, wherein the distal wall (114) and the adjustment part (103) together form a dome shape with a convexly rounded distal side (110) facing away from the proximal wall (113).

Example 13. The sealing arrangement of example 12, wherein the first sealing device (120) comprises a sealing surface (126) configured to face a surface portion (110a) of the convexly rounded distal side (110) provided on the adjustment part (103).

Example 14. The sealing arrangement of any one of examples 11-13, wherein the base part (102) comprises at least one proximal part (102a) comprising the proximal wall (113), and at least one removable distal part (102b), the annular pocket (115) being formed between the proximal and distal parts (102a, 102b).

Example 15. The sealing arrangement of any one of the preceding examples, wherein the adjustment part (103) comprises a sheet formed as a portion of a spherical shell.

Example 16. The sealing arrangement of any one of examples 1-10, wherein the adjustment part (1103) is configured to be attached to the base part (1102) by fasteners (1155), wherein at least some of the fasteners (1155) are configured to enable adjustment of a distance between the base part (1102) and the adjustment part (1103).

Example 17. The sealing arrangement of example 16, wherein a column (1115) configured to be filled with an insulating material is formed between the base part (1102) and the adjustment part (1103).

Example 18. The sealing arrangement of example 17, wherein the first sealing device (1120) is configured to be disposed between the base part (1102) and the adjustment part (1103), and wherein the annular seal (1150) is configured to be formed between a proximal surface (1110) of the adjustment part (1103) and a distal surface (1126) of the first sealing device (1120).

Example 19. The sealing arrangement of any one of the preceding examples, wherein the base part (102, 1102) is configured to be attached to the chamber wall (2) by fastening devices (30) configured to enable adjustment of the base part (102, 1102) relative to the chamber wall (2) along at least one direction parallel with the chamber wall (2).

Example 20. A climate chamber (1) for testing of vehicle components, comprising the sealing arrangement (100, 1100) of any one of the preceding examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A sealing arrangement (100, 1100) for reducing leakage of gas via an opening (10) formed in a chamber wall (2) of a chamber (1) in connection with rotation of a shaft (20) extending through the opening (10), the sealing arrangement (100, 1100) comprising:
an annular first sealing device (120, 1120) configured to be sealingly attached to the shaft (20) around a perimeter (21) of the shaft (20),
a second sealing device (101, 1101) comprising a base part (102, 1102) configured to be sealingly attached to the chamber wall (2) around the opening (10), and an adjustment part (103, 1103) defining a first aperture (104, 1104) for receiving the shaft (20), the adjustment part (103, 1103) being adjustable relative to the base part (102, 1102) to enable adjustment of a position of the first aperture (104, 1104) relative to the opening (10) in the chamber wall (2) when the base part (102, 1102) is attached to the chamber wall (2),
wherein the first sealing device (120, 1120) and the second sealing device (101, 1101) are together configured to form an annular seal (150, 1150) extending around the first aperture (104, 1104).

2. The sealing arrangement of claim 1, wherein the shaft (20) is configured to extend through the opening (10) at a shaft angle (α) defined relative to a normal direction of the chamber wall (2), and wherein the adjustment part (103, 1103) is configured to enable adjustment of the position of the first aperture (104, 1104) relative to the opening (10) to receive the shaft (20) extending through the opening (10) and the first aperture (104, 1104) at any shaft angle (α) within a predefined non-zero range of shaft angles.

3. The sealing device of claim 1 or 2, wherein the annular seal (150, 1150) is formed by a first sealing surface (126, 1126) of the first sealing device (120) and a second sealing surface (110a, 1110) of the adjustment part (103, 1103).

4. The sealing arrangement of any one of the preceding claims, wherein the adjustment part (103, 1103) is configured to be tiltable relative to the base part (102, 1102) about at least a first axis (A1), the first axis (A1) being parallel to the chamber wall (2).

5. The sealing arrangement of any one of the preceding claims, wherein the first sealing device (120, 1120) and the second sealing device (101, 1101) are configured to be mounted to the shaft (20) and the chamber wall (2), respectively, when the shaft (20) extends through the opening (10).

6. The sealing arrangement of any one of the preceding claims, wherein the first sealing device (120, 1120) comprises at least two releasably joinable first parts (121, 122; 1121, 1122) configured to be disposed on opposing portions of the perimeter (21) of the shaft.

7. The sealing arrangement of claim 6, wherein the at least two releasably joinable first parts (121, 122) together form an inner ring, and wherein the first sealing device (120) further comprises at least two releasably joinable second parts (123, 124) together forming an outer ring, and a sealing flange (125) clamped between the inner ring and the outer ring.

8. The sealing arrangement of any one of the preceding claims, wherein the base part (102, 1102) comprises at least two releasably joinable parts (111, 112) configured to be disposed on mutually opposite sides of the shaft (20) extending through the opening (10), and wherein the adjustment part (103, 1103) comprises at least two releasably joinable parts (105, 106) configured to be disposed on mutually opposite sides of the shaft (20) extending through the opening (10).

9. The sealing arrangement of any one of the preceding claims, wherein the base part (102) comprises a proximal wall (113) configured to abut the chamber wall (2), and a distal wall (114) formed at a distance from the proximal wall (113) as measured in a direction normal to the proximal wall (113), a second aperture (116) configured to overlap with the opening (10) of the chamber wall (2) being formed in the proximal wall (113) and a third aperture configured to overlap with the opening (10) of the chamber wall (2) being formed in the distal wall (114), and wherein the distal wall (114) comprises an annular pocket (115) extending around an edge (117) of the third aperture, the pocket (115) being configured to slidingly receive the adjustment part (103).

10. The sealing arrangement of claim 9, wherein the distal wall (114) and the adjustment part (103) together form a dome shape with a convexly rounded distal side (110) facing away from the proximal wall (113).

11. The sealing arrangement of claim 10, wherein the first sealing device (120) comprises a sealing surface (126) configured to face a surface portion (110a) of the convexly rounded distal side (110) provided on the adjustment part (103).

12. The sealing arrangement of any one of the preceding claims, wherein the adjustment part (103) comprises a sheet formed as a portion of a spherical shell.

13. The sealing arrangement of any one of claims 1-8, wherein the adjustment part (1103) is configured to be attached to the base part (1102) by fasteners (1155), wherein at least some of the fasteners (1155) are configured to enable adjustment of a distance between the base part (1102) and the adjustment part (1103).

14. The sealing arrangement of claim 14, wherein a column (1115) configured to be filled with an insulating material is formed between the base part (1102) and the adjustment part (1103).

15. A climate chamber (1) for testing of vehicle components, comprising the sealing arrangement (100, 1100) of any one of the preceding claims.
